Europäisches Patentamt

European Patent Office

Office européen des brevets

(19)

(11) Publication number : **0 501 771 A1**

# (12) EUROPEAN PATENT APPLICATION

(21) Application number : **92301607.5**

(22) Date of filing : **26.02.92**

(51) Int. Cl.⁵ : **G08B 26/00,** H04Q 9/00, G08C 19/22

(30) Priority : **26.02.91 JP 117076/91**

(43) Date of publication of application :
**02.09.92 Bulletin 92/36**

(84) Designated Contracting States :
**CH DE FR LI**

(71) Applicant : **NIHON PROTECH SYSTEM CO., LTD.**
**20-27 3-chome Tarumi-cho**
**Suita-shi, Osaka-fu (JP)**

(71) Applicant : **SOLTON CO., LTD.**
**13-7 2-chome Shinyokohama**
**Kouhoku-ku, Yokohama-shi, Kanagawa (JP)**

(72) Inventor : **Kurashita, Kiyoshi c/o Nihon Protec System Co.Ltd.**
**20-27 3-chome Tarumi-cho**
**Suita-shi, Osaka-fu (JP)**
Inventor : **Motohara, Moriyasu c/o Nihon Protec System Co.Ltd.**
**20-27 3-chome Tarumi-cho**
**Suita-shi, Osaka-fu (JP)**
Inventor : **Iwatani, Toshihiko c/o Nihon Protec System Co.Ltd.**
**20-27 3-chome Tarumi-cho**
**Suita-shi, Osaka-fu (JP)**

(74) Representative : **Tomlinson, Kerry John**
**Frank B. Dehn & Co. European Patent Attorneys Imperial House 15-19 Kingsway London WC2B 6UZ (GB)**

(54) **Information transmission system.**

(57) An information transmission system performs data transmission between a controller (SU) and a plurality of detecting mediums (S), such as sensors, which system is suitable for use in security systems, remote control systems and so forth, with reduced number of transmission lines and with simple construction of the controller and terminal units (ILU). A transmission line (L1,L2) connects a plurality of the terminal units in series with the controller. The controller comprises a current supply switch (G1), a current detecting circuit (Rp,AMP), a pulse signal generator circuit (COMP) for generating a pulse signal having a pulse width corresponding to the variation of current detected by the current detecting circuit, and an input information discriminating means (IDJ) for discriminating received information between ON data and OFF data. Each terminal unit comprises an information transmission switch (G2), a first timer (TC1) responsive to current supply from the controller to turn ON for detecting the state of the sensor (S) and for maintaining the switch (G2) ON for a corresponding period, a current shut-off switch (G3) disposed in the transmission line for feeding the current from the controller to the next terminal unit, and a second timer (TC2) responsive to current supply from the controller to be turned ON in order to maintain the current shut-off switch (G3) open for the period the terminal unit is active for feeding information, the second timer then turning the shut-off switch ON for permitting feeding of current to the adjacent next terminal unit.

FIG.1

EP 0 501 771 A1

The present invention relates generally to an information transmission system. More specifically, the invention relates to an information transmission system suitable for use in security systems, remote control systems and so forth, in which a plurality of input terminals are controlled by a single controller.

In the prior art, a transmission system for controlling a plurality of detecting mediums (e.g. sensors) is typically established by connecting respective of individual detecting mediums to a controller independently of others. The controller performs parallel processing for parallel information from respective detecting mediums.

However, since such a system requires a greater amount of wiring according to increasing size of the system, it is inevitable to have a substantial amount of wiring in a large system. In addition, the controller is required to have a number of input circuits respectively corresponding to the detecting mediums. There are thus the disadvantages of difficulty of installation and high cost.

On the other hand, in recent years, for automation of manufacturing processes, storage, transportation and so forth, or for automatic management or security of apartments, office buildingsand so forth, there has been implemented a tranmission system employing multiplex transmission for transferring information between terminals for transferring information indicative of conditions of the detecting mediums located in desired positions, which terminal will be hereafter referred to as "input terminal", and a controller controlling a plurality of input terminals, so as to reduce the number of transmission lines and installation steps.

However, as is well known, such conventional transmission system performs multiplex transmission by frequency modulation, time division or so forth, and -suffers complicated construction and high cost for the controller and the terminal device.

In view of the problems in the prior art as set forth above, it is an object of the present invention to provide an information transmission system which can control a plurality of detecting mediums with a reduced number of transmission lines and can simplify constructions of a controller and/or input/output terminals.

In order to accomplish the above-mentioned and other objects, according to the present invention, an information transmission system including a plurality of input terminals respectively located at desired positions and a controller connected to respective of the input terminals for collecting ON data and OFF data from the latter to perform predetermined data processing for the received data, comprises:

a transmission line connecting a plurality of the input terminals in series with respect to the controller;

a current supply switch circuit provided in the controller for selectively supplying and shutting down supply of an electric current for respective of the input terminals through the transmission line;

a current detecting circuit provided in the controller for detecting variation of current flowing through the transmission line;

a pulse signal generator circuit provided in the controller for generating pulse signal having a pulse width corresponding to the variation of current detected by the current detecting circuit;

an input information discriminating means discriminating received information from respective of the input terminals between ON data and OFF data on the basis of the pulse width of the pulse signal;

an information transmission switch provided in each of the input terminals and responsive to current supply from the controller through the transmission line for permitting flow of a predetermined amount of current to the grounding line;

a first timer provided in each of the input terminals and responsive to current supply from the controller to turn ON for detecting state of a detecting medium which is connected to the input terminal and serves as source of the information, for maintaining the information transmission switch in ON state for a period corresponding to the detected state of the detecting medium;

a current shut-off switch provided in each of the input terminals and disposed in the transmission line for feeding the current from the controller to the adjacent next input terminal, which current shut-off switch being held open to shut-off current flow for a period in which the associated input terminal is active for feeding information; and

a second timer provided in each of the input terminals and responsive to current supply from the controller to be turned ON and maintaining ON state for a given period in order to maintain the current shut-off switch open for the corresponding period, the second timer turning the shut-off switch to be closed for permitting feeding of current to the adjacent next input terminal when the given period is expired.

According to a preferred feature, the system further comprises

an output transmission line connecting the controller and respective of the input terminals;

a control signal generator provided in the controller for feeding a control signal through the output transmission line in synchronism with a predetermined signal; and

a load control circuit provided in each of the input terminals and responsive to the control signal transmitted through the output transmission line for controlling a load connected to the input terminal.

According to the present invention as set forth above, supply of driving current for the input terminal from the controller and detection of the state of the detecting medium, such as a sensor, are performed through the transmission line connecting a plurality of input terminals in series with respect to the controller.

A current signal reflecting the detected state of the . detecting medium is fed to the controller through the transmission line. The current detecting circuit in the controller detects the current signal so that the pulse generator circuit may generate the pulse signal having the pulse width corresponding to the pulse width of the current signal. The information discriminating circuit makes discrimination as to whether the received information has ON data or OFF data.

On the other hand, the output transmission is, in the preferred construction, performed in synchronism with supply of the driver current from the controller to respective of the input terminals with periodically shifting of the input terminals to be activated. The current signal from each input terminal to the controller contains different values corresponding to ON and OFF states of the detecting medium. So as to distinguish the current signals from respective of the input terminals, a given interval is provided between trigger timing of respective of the input terminals. During the interval, the controller determines the control signal for the adjacent next input terminal and outputs the same through the output transmission line. The adjacent next input terminal performs input transmission and, at the same time, reads the control signal on the output transmission line to store the control signal in an output latching circuit so as to control the output medium as the load into the ON and OFF state.

The present invention will be understood more fully from the detailed description given herebelow and from the accompanying drawings of the preferred embodiment of the invention, which, however, should not be taken to limit the invention but are for explanation and understanding only.

In the drawings:

**Fig. 1** is a circuit diagram of one embodiment of an information transmission system according to the present invention;

**Fig. 2** is a schematic block diagram showing the overall construction of an information transmission system of the invention;

**Fig. 3** is a timing chart showing timing operation of an input terminal;

**Fig. 4** is a timing chart showing waveforms at various portions in the circuit of the preferred embodiment of the information transmission system of the invention;

**Fig. 5** is a circuit diagram of a second embodiment of the information transmission system according to the invention;

**Fig. 6** is a plan view showing one example of an input and output unit; and

**Fig. 7** is a timing chart showing operational timing in the second embodiment of the information transmission system of the invention.

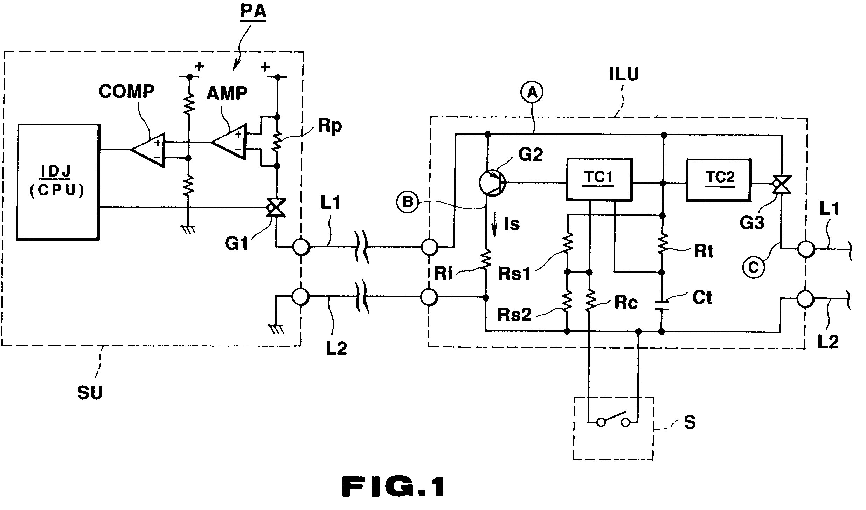

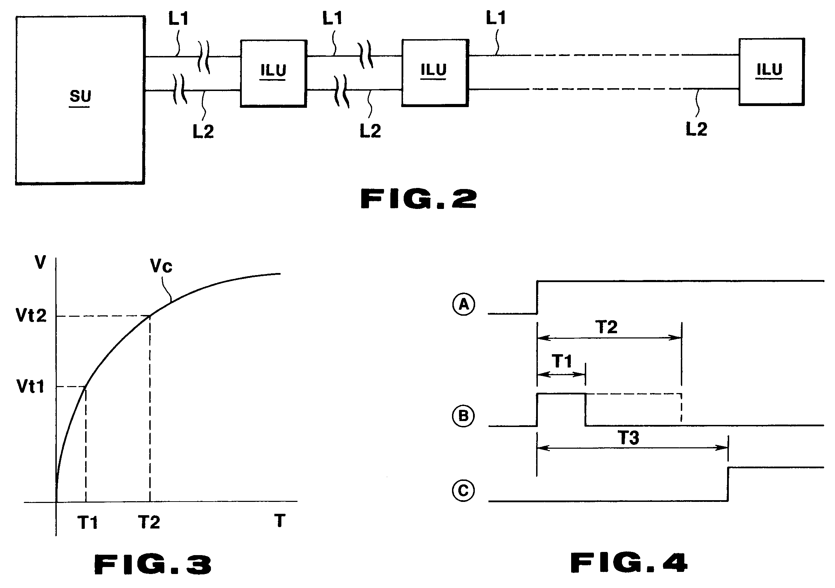

Referring now to the drawings, particularly to **Figs. 1** and **2**, there is schematically illustrated a first embodiment of an information transmission system, according to the present invention. As can be seen from **Fig. 1**, a control unit **SU** includes a current supply switch **G1** for selectively supplying and shutting off current supply for an input terminal unit **ILU** through a common transmission line **L1**.

The control unit **SU** also includes a pulse signal generator circuit **PA** which detects a current signal flowing through the common transmission line **L1** to produce a pulse signal having a pulse width corresponding to the pulse width of the detected current signal. In the shown embodiment, the pulse signal generator circuit **PA** is formed by an operational amplifier **AMP** which performs current-to-voltage conversion and amplifies the resultant voltage, a pulse converter circuit **COMP** which may comprise a comparator and receives the amplified signal to perform waveform shaping to produce the output pulse, and so forth.

The control unit **SU** further includes an input information discriminating means **IDJ** which discriminates information received from the input terminal unit **ILU** between ON data and OFF data. The input information discriminating means **IDJ** in practice performs discrimination by counting up a clock from the leading edge of the pulse signal to the trailing edge of the pulse signal, and comparing the counted value with a predetermined reference value, for example. The input information discriminating means **IDJ** can be established as a software to be executed by a central processing unit (CPU) which forms a control circuit for controlling the overall system. The control circuit (CPU) may comprise a microcomputer, a personal computer and so forth in appropriate architecture.

The manner of discrimination of the input data should not be limited to the foregoing process, but can employ any known algorithm for properly performing the desired discrimination process. Also, the control circuit should not be limited to those listed above but can be any digital or analog signal processor which can perform the desired signal processing operation.

For detecting current (**Is**) as the signal component, known electromagnetic induction, optoelectric conversion and any other technologies can be employed. In the shown embodiment, the magnitude of current is detected by means of a current detecting circuit which detects a difference of potentials at both ends of a resistor **Rp** which has one of the most simple circuit constructions and is thus preferred in view of the cost.

The current supply switch **G1** is connected to a power source (+) through the resistor **Rp** which serves for extracting the magnitude of current as the potential difference. The current supply switch **G1** is controlled by the control circuit (CPU) for governing current supply for the input terminal unit **ILU**.

As can be seen from **Fig. 2**, a plurality of input terminal units **ILU** are connected in series with respect to the control unit **SU**. For the first input terminal unit

ILU located in the closest position to the control unit SU and thus directly connected to the latter, first and second timer circuits TC1 and TC2 are provided. The first timer circuit TC1 is connected to an information transmission switch G2 and a sensor circuit S which serves as a detecting medium.

On the other hand, the second timer circuit TC2 is connected to a current shut-off switch G3. The first and second timer circuits TC1 and TC2 are designed to be triggered simultaneously in response to initiation of current supply. The first timer circuit TC1 is designed to supply low (L) level for the base electrode of a PNP transistor which forms the information transmission switch G2 for a preset period of time after initiation of current supply. In response to supply of L level to the base electrode, the PNP transistor as the information transmission switch G2 is turned ON to permit the signal current Is to flow through a resistor Ri. By this, the potential difference between both ends of the resistor Rp in the control unit SU is produced.

The shown embodiment is designed to make judgement for the opening and closing state of the sensor circuit S detecting upon a period, in which the potential difference between both ends of the resistor Rp is maintained, and which period represents the period to maintain the information transmission switch ON. For this, the first timer circuit TC1 switches the supply level for the base electrode of the PNP transistor as the information transmission switch G2 upon expiration of the predetermined period to turn OFF the information transmission switch G2. The predetermined period which is set for the timer TC1 upon initiation of the current supply, is variable depending upon the ON and OFF state of the sensor circuit S.

Namely, when the first timer circuit TC1 is constructed to function as an RC timer as illustrated in Fig. 1, the first timer circuit TC1 operates as illustrated in Figs. 3 and 4. Upon initiation of current supply for the input terminal unit ILU, a timer capacitor Ct starts to be charged, as illustrated in Fig. 3. The charge voltage VC of the timer capacitor Ct is supplied to the first timer circuit TC1. The first timer circuit TC1 compares the received charge voltage Vc with a reference voltage (Vt1 or Vt2) which is determined by resistors Rs1, Rs2 and Rc. The first timer circuit TC1 maintains the supply level for the information transmission switch G2 at L level while the charge voltage Vc is maintained lower than the reference voltage (Vt1 or Vt2) to maintain the information transmission switch G2 ON and turns the supply level into high (H) level when the charge voltage Vc increases across the reference voltage (Vt1 or Vt2) to turn the information transmission switch G2 OFF.

The reference voltages (Vt1 and Vt2) to be supplied to the first timer circuit TC1 are selected depending upon the state of the sensor circuit S. In the shown embodiment, when the sensor circuit S is in the ON state, a circuit across the resistor Rc is closed so that the reference voltage Vt1 is established by the resistors Rs1, Rs2 and Rc. In such case, as can be seen from Fig. 3, the information transmission switch G2 is maintained in the ON state for a period T1, in which the charge voltage Vc of the timer capacitor Ct is held lower than the reference voltage Vt1. On the other hand, when the sensor circuit S is in the OFF state, the circuit across the resistor Rc is held open. Therefore, the reference voltage Vt2 is established only by the resistors Rs1 and Rs2, so the reference voltage Vt2 is higher than Vt1. Therefore, in this case, the information transmission switch G2 is maintained at the ON position for a period T2, in which the charge voltage Vc is maintained lower than the reference voltage Vt2.

As set forth above, while the information transmission switch G2 is maintained ON, the potential difference at both ends of the resistor Rp in the control unit SU is maintained. Therefore, the operational amplifier AMP amplifies and enhances to output a potential difference indicative signal. The potential difference indicative signal is shaped into a rectangular or square pulse by the pulse converting circuit COMP having the pulse width corresponding to the ON period of the information transmission switch G2, i.e. T1 or T2. The control circuit (CPU) receives the pulse signal from the pulse converting circuit COMP to measure the pulse duration and make discrimination between ON and OFF states of the sensor circuit S.

The second timer circuit TC2 is set a period T3 slightly longer than the longest possible duration of time measurement to be performed by the first timer circuit TC1, as shown in Fig. 4. In the shown case, the second timer circuit TC2 is set to the duration longer than the period T2. The second timer circuit TC2 is connected to a current shut-off switch G3 for controlling flow of the current therethrough. The second timer circuit TC2 as triggered by initiation of current supply, starts measurement of the elapsed time from initiation of current supply. At the same time, the second timer circuit TC2 turns the current shut-off switch G3 OFF so as to block current to flow to the common transmission line L1 connected to the next input terminal unit ILU.

The period T3 defines a period to maintain the input terminal unit ILU active, in which the control unit SU may check the state of the sensor circuit S. When the predetermined period T3 expires, the second timer circuit TC2 detects time-up and turns on the current shut off switch G3 so that the current may pass to the next input terminal unit ILU. Since the period T3 is set to be longer than the period T2 to transmit the information indicative of the state of the sensor S, the control unit SU may confirm completion of information transmission during the interval from expiration of the period T1 or T2 to expiration of the period T3.

To perform the function set forth above, the second timer circuit TC2 may comprise a monostable multivibrator, for example. While the shown embodiment employs a fixed period **T3** to define the active period of the input terminal unit **ILU**, it is also possible to design the second timer circuit so that it turns the current shut-off switch **G3** ON after a predetermined period after expiration of the period **T1** or **T2** set by the first timer circuit **TC1**.

Once the current shut-off switch **G3** is turned ON, the current supplied from the control unit **SU** passes through the current shut-off switch **G3** by-passing the first and second timers **TC1** and **TC2** due to difference of circuit impedances and thus directly supplied to the next input terminal unit **ILU**. As a result, the next input terminal unit **ILU** becomes active to transmit information indicative of the state of the sensor circuit **S** connected thereto.

The construction and operation of the next and subsequent input terminal units **ILU** can be identical to that of the first input terminal unit discussed hereabove. Therefore, discussion is omitted for avoiding redundant discussion and maintaining the disclosure to be simple enough to facilitate understanding of the invention.

As can be appreciated herefrom, in either case that the sensor circuit **S** is in the On state or OFF state, the input terminal unit **ILU** is responsive to the supply of the current from the control unit **SU** to send the signal indicative of the state of the associated sensor, unless circuit breakage is caused in the common transmission line **L1** or a transmission line **L2**. Since the input terminal units **ILU** connected in series are switched in order and thus the sensor state indicative signals are input to the control unit **SU** in order, the control circuit (CPU) can discriminate states of respective sensors depending upon the order of the received sensor state indicative signals and the pulse width thereof.

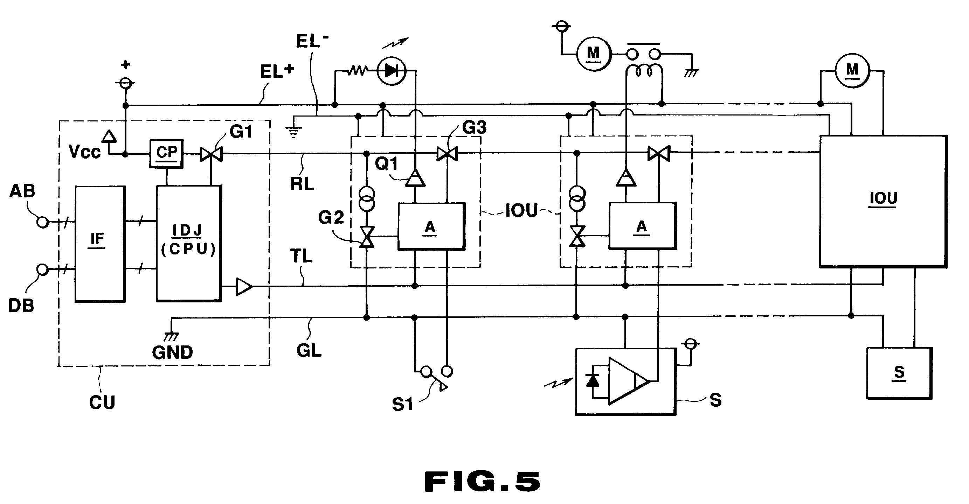

**Fig. 5** shows the second embodiment of the information transmission system according to the present invention.

In this embodiment, a control unit **CU** comprises a microcomputer (CPU) and peripheral units similarly to the foregoing first embodiment. The shown system is designed in software so that it may be adapted to various system designs such as for communication with a superior host computer system which externally controls the operation of the control unit **CU**, or with the identical construction of another control unit **CU** located at a different position, for directly controlling a known display system for displaying various information, such as detected states of the sensor circuits. In addition, the control unit **CU** may incorporate a multiplexer to solely control input and output operations of a plurality of input and output terminal units **IOU** on a plurality of channels.

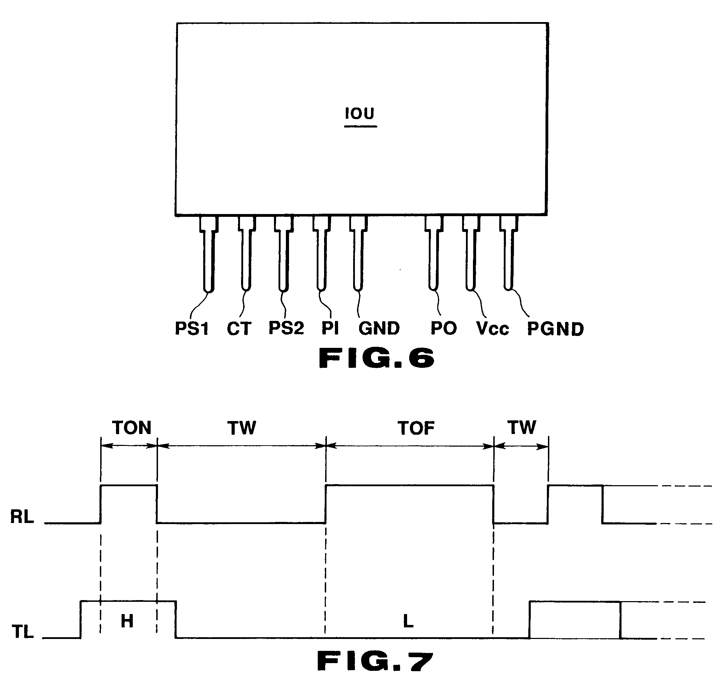

As shown in **Fig. 6**, the input and output terminal unit **IOU** has a transmission terminal **PS1** which is connected to the control unit **CU** through an input transmission path **RL** to receive current therefrom and transmit the current signal thereto. The input and output terminal unit **IOU** also has a transfer terminal **PS2** for selectively permitting and blocking current supply for the succeeding input and output terminal unit **IOU** and for passing signal from the succeeding input and output terminal units to the control unit **CU**, an input terminal **P1** connected to the sensor circuit **S** as the detecting medium, ON and OFF states of which are to be detected, a grounding terminal **GND**, a receiver terminal **CT** to receive output signals from the control unit **CU**, an output terminal **PO** connected to an outputting medium to switch the latter ON and OFF, a power supply terminal **Vcc**, and a power grounding terminal **PGND**. The input and output terminal unit **IOU** with the seven terminals set forth above, is fabricated into an IC package in a form illustrated in **Fig. 6**.

In the shown embodiment, photo-couplers are incorporated in respective of the input and output terminal units **IOU** for insulating the three transmission lines of the input transmission path **RL**, the output transmission path **TL**, and ground connection path **GL**, and two power lines of load driving system **EL+** and **EL-** for avoiding the mutual influence of voltage drop on the transmission path. However, when the possible voltage drop is not significant, the insulation may not be necessary.

It should be appreciated that the specific construction of the input and output terminal unit **IOU** as illustrated in **Fig. 6** is just for illustration but can be modified in any ways. For instance, the number of terminal pins to be included in the IC package should be variable depending upon the specific design of systems for which the present invention is applied.

The input and output terminal unit **IOU** which is the leading unit in a plurality of input and output terminal units connected in series through the input transmission path **RL** and thus directly connected to the control unit **CU**, is responsive to initiation of supply of current from the control unit **CU** through the input transmission path **RL** to turn OFF the current shut-off switch **G3**. As a result, the transfer terminal **PS2** is disconnected from the input transmission path **RL** so as not to supply current to the next and subsequent input and output terminal units. As a result, the second and subsequent input and output terminal units are held inoperative and only the first input and output terminal unit **IOU** closest to the control unit **CU** becomes active for transmitting information indicative of the state of the associated sensor circuit **S** to the control unit **CU**.

The circuit construction for transmitting the information representative of the state of the associated sensor circuit **S** may be identical or similar to that illustrated and discussed with respect to the foregoing first embodiment.

After expiration of the predetermined active period of the first input and output terminal unit **IOU**, the current shut-off switch **G3** is turned into the ON state to establish connection of the transfer terminal **PS2** with the input transmission line **RL** so that the current from the control unit **CU** may be fed to the next input and output terminal unit **IOU**. Then, the next input and output terminal unit **IOU** solely becomes active while the subsequent input and output terminal units as well as the first and the closest input and output terminal unit are held inoperative. As can be appreciated herefrom, by activating respective of the input and output terminal units **IOU** in series connection, in sequential order, information indicative of respective of the sensor circuits can be detected in order.

In the shown embodiment, respective output transmissions from the control unit **CU** to the input and output terminal units **IOU** are performed through the output transmission line **TL** in synchronism with the input transmission through the input transmission line **RL**. The control unit CU shifts trasmission in synchronism with the input transmission that is regularly returned from the input and output terminal units IOU in the order of their triggering. In synchronism therewith, the input and output terminal unit **IOU** is responsive to turning ON of the information transmission switch **G2** upon reception of the current supply to detect the signal condition at the output transmission path **TL** for latching the output corresponding thereto.

**Fig. 7** explanatorily shows timings of input and output transmission. In the timing chart of **Fig. 7**, the period **TON** represents the ON period of the information transmission switch **G2** when the associated sensor **S** is in the ON state.On the other hand, the period **TOF** represents the ON period of the information transmission switch **G2** when the associated sensor **S** is in the OFF state. The period **TW** in the timing chart of **Fig. 7** shows triggering intervals from turning OFF of the information transmission switch **G2** in one of the input and output terminal units **IOU** to turning ON of the information transmission switch in the next input and output terminal unit. As can be clear from **Fig. 7**, the total period as a sum of **TON** and **TW**, and **TOF** and **TW** represents a period, in which the input and output terminal unit **IOU** is maintained active to detect the state of the associated sensor circuit **S**.

As can be seen from **Fig. 7**, the control unit **CU** periodically outputs the output pulse to the output transmission line **TL**. The output timing of the output pulse is slightly earlier than the timing at which the current supply switch **G1** is turned ON to initiate supply of the current as can be seen. The input and output terminal unit **IOU** is responsive to the output pulse to turn a transistor **Q1** ON when the information transmission switch G2 therein is in the ON state, and OFF when the information switch therein is in the OFF state. The ON or OFF state of the transistor **Q1** is maintained until the next output transmission is received. With the state of the transistor **Q1**, the states of output loads, such as a photodiode and motor **M** and so forth are controlled.

In the preferred construction, power MOS-transistors may be employed as the transistors **Q1** so that a large magnitude of current can be driven with low power consumption.

As set forth above, according to the present invention, since the state of the sensor can be easily detected by detecting the pulse width, even when the signal current from the farmost input terminal unit is attenuated due to increasing of current loss caused by current consumption by the input terminal unit per se and/or increased length of the transmission line, signal current detection can be done with a single threshold value. This allows substantial extension of the transmission line.

In addition, since the magnitude to flow through the transmission line can be relatively large, such as 100 mA, and the pulse width can be widened in comparison with that in the multiplexing system, the system may have higher reliability in terms of noise.

On the other hand, according to the present invention, when one input terminal unit complete transmission of information, the next input terminal unit receives the driver current to be activated so that the information can be transmitted from respective of the input terminal unit in order. The single transmission line can be commonly used for transmission of the driver current and signal. This allows connection of the control unit and the input terminal units with only two wires to contribute to simplification of the circuit construction and for facilitating wiring work. This clearly results in significant reduction of the cost.

In addition, with two lines for input and output, multiple input and output transmission can be achieved. Furthermore, with the simple circuit construction, highly reliable information transmission becomes possible.

While the present invention has been discussed in detail in terms of the preferred embodiments of the invention, the invention can be implemented in various ways with incorporating various modifications, additions and ommissions. Therefore, it should be understood that the present invention includes all possible implementations and embodiments falling within the scope of the claims.

For example, though the shown embodiments utilize the function of capacitors for accumulating and holding the charge as a means for maintaining the output level, a similar or equivalent function can be achieved by various circuit elements,such as a flip-flop circuit, or other memory means. Also, in the shown embodiments, driver current for the input terminal unit or input and output terminal unit is supplied through a common transmission line; it is, of course, possible to constantly supply the driving power to a supply line independent of the transmission line.

## Claims

1. An information transmission system including a plurality of terminal units (ILU) respectively located at desired positions and a controller connected to respective of said terminal units for collecting ON data and OFF data from the latter to perform predetermined data processing for the received data, said system comprising:

a transmission line (L1,L2) connecting a plurality of said terminal units in series with respect to said controller;

a current supply switch circuit (G1) provided in said controller for selectively supplying and shutting down supply of an electric current for respective of said input terminal units through said transmission line;

a current detecting circuit ($R_p$,AMP) provided in said controller for detecting variation of current flowing through said transmission line;

a pulse signal generator circuit (COMP) provided in said controller for generating a pulse signal having a pulse width corresponding to the variation of current detected by said current detecting circuit;

an input information discriminating means (IDJ) for discriminating received information from respective of said terminal units between ON data and OFF data on the basis of the pulse width of said pulse signal;

an information transmission switch (G2) provided in each of said terminal units and responsive to current supply from said controller through said transmission line for permitting flow of a predetermined amount of current in the transmission line;

a first timer (TC1) provided in each of said terminal units and responsive to current supply from said controller to turn ON for detecting the state of a detecting medium which is connected to said terminal unit and serves as a source of the information, and for maintaining said information transmission switch in the ON state for a period corresponding to the detected state of said detecting medium;

a current shut-off switch (G3) provided in each of said terminal units and disposed in the transmission line for feeding the current from said controller to the adjacent next terminal unit, which current shut-off switch being held open to shut-off current flow for a period in which the associated terminal unit is active for feeding information; and

a second timer (TC2) provided in each of the terminal units and responsive to current supply from said controller to be turned ON and maintaining the ON state for a given period in order to maintain said current shut-off switch (G3) open for the corresponding period, said second timer turning said shut-off switch to be closed for permitting feeding of current to the adjacent next input terminal when said given period is expired.

2. An information transmission system as claimed in claim 1, further comprising an output transmission line (TL) connecting said controller and respective units;

a control signal generator provided in said controller for feeding a control signal through said output transmission line ; and

a load control circuit (Q1) provided in each of said terminal units and responsive to said control signal transmitted through said output transmission line for controlling a load connected to the terminal unit.

3. An information transmission system as claimed in claim 2 wherein the control signal generator provides the control signal in synchronism with supply of current to the terminal units and operation of the information transmission switches.

4. An information transmission system as claimed in claim 2 or 3 wherein the terminal unit is responsive to turning on of the information transmission switch (G2) upon reception of the current supply for detecting the signal condition of the output transmission line (TL) and for latching the corresponding control signal.

**FIG.1**

EP 0 501 771 A1

EP 0 501 771 A1

**FIG.2**

**FIG.3**

**FIG.4**

**FIG.5**

EP 0 501 771 A1

EP 0 501 771 A1

**IOU**

PS1  CT  PS2  PI  GND  PO  Vcc  PGND

# FIG.6

TON | TW | TOF | TW

RL

TL

H    L

# FIG.7

**European Patent Office**

# EUROPEAN SEARCH REPORT

Application Number

EP 92 30 1607

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2 131 991 (ROBERT PHILP)<br>* page 2, line 1 - page 3, line 80 *<br>* page 5, line 69 - line 118 *<br>* figures 1-4,8 *<br>--- | 1-4 | G08B26/00<br>H04Q9/00<br>G08C19/22 |
| Y | EP-A-0 037 502 (LICENTIA PATENT-VERWALTUNGS-GMBH )<br>* page 4, line 15 - page 5, line 20; figures 1,2 *<br>--- | 1-4 | |
| Y,P | EP-A-0 450 930 (IDEC IZUMI CORPORATION)<br>* the whole document *<br>----- | 1-4 | |
| | | | TECHNICAL FIELDS SEARCHED (Int. Cl.5 )<br><br>G08B<br>G08C<br>H04Q |

The present search report has been drawn up for all claims

| Place of search | Date of completion of the search | Examiner |
|---|---|---|
| THE HAGUE | 28 APRIL 1992 | WANZEELE R.J. |

EPO FORM 1503 03.82 (P0401)